(19) Europäisches Patentamt
European Patent Office
Office européen des brevets

(11) **EP 3 490 766 B1**

(12) **EUROPEAN PATENT SPECIFICATION**

(45) Date of publication and mention
of the grant of the patent:
**02.09.2020 Bulletin 2020/36**

(51) Int Cl.:
***B27N 3/28*** *(2006.01)*   ***B29C 48/02*** *(2019.01)*
***B29C 48/16*** *(2019.01)*   ***B29C 48/40*** *(2019.01)*
***B29C 48/52*** *(2019.01)*

(21) Application number: **17768509.6**

(22) Date of filing: **31.07.2017**

(86) International application number:
**PCT/IB2017/054671**

(87) International publication number:
**WO 2018/020485 (01.02.2018 Gazette 2018/05)**

(54) **WPC CONTAINING PARTICLE BOARD DUST, A METHOD OF MANUFACTURE AND USE THEREOF**

WPC MIT SPANPLATTENSTAUB, VERFAHREN ZUR HERSTELLUNG UND VERWENDUNG DAVON

WPC CONTENANT DE LA POUSSIÈRE DE PANNEAU DE PARTICULES, SON PROCÉDÉ DE FABRICATION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2016 PL 41813416**

(43) Date of publication of application:
**05.06.2019 Bulletin 2019/23**

(73) Proprietor: **HARTIKA Sp. z o.o.**
**15-085 Bialystok (PL)**

(72) Inventors:
• **BIERYLO, Dariusz Cezary**
**15-378 Bialystok (PL)**
• **CZARNIECKI, Marek**
**15-169 Bialystok (PL)**
• **BARTLOMIEJCZUK, Tomasz**
**15-684 Bialystok (PL)**
• **WIERZBICKI, Radoslaw**
**15-161 Bialystok (PL)**
• **SAJEWICZ, Slawomir**
**15-345 Bialystok (PL)**

(74) Representative: **Patpol Kancelaria Patentowa Sp. z o.o.**
**Nowoursynowska 162J**
**02-776 Warszawa (PL)**

(56) References cited:
**EP-A2- 0 031 745**      **EP-A2- 1 498 241**
**EP-B1- 0 668 820**      **WO-A1-01/21367**
**US-A1- 2010 310 893**

## Description

TECHNICAL FIELD

The present disclosure relates to the field of wood-plastic composite (WPC) materials, in particular the WPC material comprising a significant content of particle board (PB) dust obtained from recycling of wood waste, such as furniture and construction elements. The invention is directed to the method of manufacturing of the WPC material comprising the PB dust according to claim 1 and use of the PB dust for the manufacture of WPC material comprising PB according to claim 9.

BACKGROUND OF THE INVENTION

Wood plastic composite (WPC) is a composite material made of thermoplastic polymers, for example polyethylene (PE), polyvinyl chloride (PVC), polypropylene (PP), acrylonitrile butadiene styrene (ABS), polystyrene (PS), polylactic acid (PLA), polysulfone (PES), polyhydroxyalkanoate (PHA), poly(styrene-butadienestyrene) (SBS), poly(styrene-ethylene-butadiene-styrene) (SEBS), thermoplastic polyurethane (TPU), thermoplastic elastomers (TPE), polyethylene oxide (PEO), ethylene-vinyl acetate (EVA), styrene maleic anhydride (SMA), or poly(methyl methacrylate) (PMMA), and materials containing wood fibers such as wood pulp or flour, sawdust, paper mill and lumber mill waste and the like. WPC is environmentally friendly and requires less maintenance than the alternatives of solid wood treated with preservatives or solid wood of rot-resistant species [see, for example, Recent Advances in the Processing of Wood-Plastic Composites, by Jin Kuk Kim and Kaushik Pal, Springer-Verlag Berlin Heidelberg, 2011].

The WPC is resistant to cracking and splitting and can be extruded into many useful articles of manufacture. It is commonly used for outdoor deck floors, railings, fences, landscaping timbers, cladding and siding, park benches, molding and trim, window and door frames, as well as the indoor and garden furniture. It is estimated that the total production of WPC in the European Union in 2012 amounted to 265 000 tons and it is expected to increase to at least 580 000 tons by 2020 [bioplastics MAGAZINE, 03/14, vol. 9, p 42- 44].

Many methods of WPC production have been previously disclosed. In general WPC production method comprises mixing ground wood particles and heated thermoplastic resin and subsequent extrusion of the composite into the desired shape, for example by injection molding. The basic production method is disclosed in JP59156712, which describes a process comprising wood chip crushing in the presence of thermosetting resin emulsion, in particular urea resin emulsion, drying it into fine powder, which is subsequently mixed with thermoplastic polymer, in particular PVC, and shaping the wood material - polymer mixture by heating into a pellet form or directly into shaped articles by compression, extrusion or injection. In the method disclosed therein, additives, such as inorganic fillers (e.g. calcium carbonate powder), stabilizers (e.g. lead), or pigments (e.g. titanium oxide) can be used.

In order to facilitate WPC production process or improve properties of WPC end products various different additives can be used. Such additives are described, for example, in WO2004060066 and include: coupling agents, to promote adhesion and dispersion of the particles of the mix; stabilizers, to prevent degradation during processing and service; UV stabilizers, to prevent degradation of the finished product; foaming agents, to reduce the density of the finished product; and lubricants, to improve flow and prevent edge damage in the extrusion process. Other additives include flame retardants, as described, for example in US20160137820, biocidal agents, as described for example, in US2010330185 and references cited therein, and coloring agents as described, for example in EP1816160. Examples of formulations, production processes, and production equipment are presented, for example in US6344504, US6180257, US6117924, and US5516472.

Different materials can be used as a source of wood particles in WPC. For example, the wood fiber component may be derived from softwood (such as pine, spruce, fir, or cedar) or hardwood (such as poplar or alder) or a combination thereof, and used in WPC manufacturing process in the form of wood flour. However, it can be also be derived from off-cuts and manufacturing scrap from wood industry, for example from plywood production. WPC can also be produced from wood fiber material from medium density or high density fiberboards (MDF and HDF) as disclosed in EP 1 498 241.

Moisture control of the starting wood material is crucial in the manufacturing process of WPC. Articles made of WPC in the extrusion process should be as dry as possible. The maximum water content of the WPC should be 4% by weight or less and preferably should be as low as 0.5 to 2.5% by weight (see for example US2003/0021915). Therefore, the water content of the wood starting material used in the WPC production should be 4% by weight or less and preferably it should not exceed 2% by weight of the wood starting material.

Particle board (PB) is one of the products widely used in furniture manufacturing and construction, which is manufactured from wood material in a form of wood chips, sawmill shavings, or even sawdust, that are formed into dense articles by means of a synthetic resin or suitable binders, such as urea-formaldehyde resins, phenolformaldehyde resins, melamine-formaldehyde resins, isocyanates or combinations thereof. Since it is very commonly used, there is a lot of waste product made of or containing PB. Recycling of the PB material is very complex and usually requires chemical and thermal treatment of the raisin bonded wood particles/fibers (see, for example US 2003/0056873 and references cited therein).

EP0668820B1 discloses a method of manufacturing wood plastic composite comprising mixing wood filler in the amount of 40 - 80% by weight with heated thermoplastic polymer in the amount of 20 - 60% by weight and extruding thus formed mixture into the desired shape, wherein the wood filler comprises wood dust from a recycled particle board in the amount of 40 - 98% by weight, wherein the water content in the wood filler used as a starting material in the manufacturing method amounts to 5 - 10 % by weight.

The objective of the present intention is to provide a method of utilizing PB recycled material for production of WPC.

DISCLOSURE OF INVENTION

The inventors of the present invention, which is defined in claims 1 and 9, have surprisingly found that waste PB can be manufactured into WPC, thus providing a method for PB recycling.

The present disclosure provides wood plastic composite (WPC) comprising wood filler in the amount of 40 - 80% by weight, thermoplastic polymer in the amount of 20 - 60% by weight and additives in the amount of 0 - 30 % by weight, wherein the wood filler comprises wood dust from the recycled particle board in the amount of 40 - 98% by weight.

Preferably, the water content of the wood filler used as a starting material for manufacturing of the WPC of the invention amounts to 5 - 10 % by weight, preferably 5-8 %.

In the preferred embodiment of the invention the wood filler in the WPC comprises wood dust from the recycled PB in the amount of 50 - 95% by weight. More preferably, the wood filler comprises wood dust from the recycled PB in the amount of 50, 70 or 95% by weight.

Also in the preferred embodiment the wood filler in the WPC, in addition to wood dust from the recycled PB also comprises wood flour from recycled or waste wood or wood dust from recycled or waste MDF or HDF, or mixture thereof, in the amount from 2 - 60%. More preferably, the wood filler in the WPC comprises wood flour from recycled or waste wood or wood dust from recycled or waste MDF or HDF in the amount from 5 - 50%. Most preferably, the wood filler in the WPC, in addition to wood dust from the recycled PB also comprises wood dust from recycled or waste MDF or HDF or mixture thereof. In addition to wood flour or MDF/HDF dust, the dust from other wood products, such as oriented strand board (OSB) or wood veneer, can be used.

The wood filler in the WPC of the invention is composed of small particles with the diameter in the range from 0.05 to 1.5 mm, preferably from 0.05 to 1.2 mm, and most preferably from 0.05 to 1 mm. The term "particles" as used herein refers to minute fragment of wood or wood-derived material (such as PB, MDF, HDF, OSB) and it also encompasses wood and wood-derived fibers.

The wood plastic composite comprises standard thermoplastic polymers used in the field of the WPC. Examples of such thermoplastic polymers include polyethylene (PE), polyvinyl chloride (PVC), polypropylene (PP), acrylonitrile butadiene styrene (ABS), polystyrene (PS), polylactic acid (PLA), polysulfone (PES), polyhydroxyalkanoate (PHA), poly(styrene-butadiene-styrene) (SBS), poly(styrene-ethylene-butadiene-styrene) (SEBS), thermoplastic polyurethane (TPU), thermoplastic elastomers (TPE), polyethylene oxide (PEO), ethylene-vinyl acetate (EVA), styrene maleic anhydride (SMA), and poly(methyl methacrylate) (PMMA), or a mixture thereof. Preferably, the thermoplastic polymer in the WPC of the invention is selected from a group comprising polyethylene (PE), polyvinyl chloride (PVC), polypropylene (PP), acrylonitrile butadiene styrene (ABS), polystyrene (PS) and polylactic acid (PLA). More preferably, polyvinyl chloride (PVC) is used as a thermoplastic polymer in the WPC. The thermoplastic polymers selected from the above mentioned polymers can be obtained from plastic recycling.

The wood plastic composite can comprise additives commonly used in the field of plastic materials that are known to a person skilled in the art. These additives are selected from a group comprising coupling agents, stabilizers, UV stabilizers, foaming agents, lubricants, flame retardants, biocidal agents, coloring agents and mineral fillers. These additives are standard additives that are used in the manufacture of the WPC. Examples of coupling agents that can be used in the WPC include polyolefin maleate and silanes (e.g. aminosilane or mercaptosilane). Examples of stabilizers include antioxidants, such as phosphates. Examples of UV stabilizers include benzophenol and benzotriazole. Foaming agents that can be used in the WPC of the invention include microspheres, as well as chemical and physical porephores. Examples of chemical porephoares include organic or inorganic bicarbonates or oxylates, azo-chemicals, hydroxides, and amine nitrates. The lubricants that can be used in the WPC include stearates and inorganic lubricants based on calcium and zinc. Typical flame retardants include ammonium polyphosphate, melamine phosphate, zinc borate, magnesium hydroxide and decabromodiphenyl oxide/antimony trioxide. Biocidal agents include antifungal inorganic and organic active substances, such as zinc borate, thiabendazole (TBZ) and 3-iodo-2-propinyl N-butylcarbamate (IPBC). Coloring agents that can be used in the WPC include different inorganic pigments and organic dyes. Suitable inorganic pigments may be selected from the group consisting of metal oxides, metal hydroxides, metal sulfides, metal selenides or metal tellurides, and include zinc oxide, zinc hydroxide, calcium hydroxide, iron oxide, aluminum oxide, titanium dioxide, magnesium oxide, manganese oxide, zirconium oxide, nickel hydroxide, vanadium oxide, silver vanadium oxide and the like. The organic dyes that can be used comprise metal organic salts or metal complex salts. Mineral fillers can also be used in the WPC. Examples of such fillers include talc or mica.

The invention provides a method of manufacturing wood plastic composite according to claim 1, the WPC being described above, which comprises mixing wood filler in the amount of 40 - 80% by weight with heated thermoplastic polymer in the amount of 20 - 60% by weight and optionally the additives in the amount of 0 - 30 % by weight and extruding thus formed mixture into the desired shape, wherein the wood filler comprises wood dust from the recycled particle board in the amount of 40 - 98% by weight, preferably 50 - 95% by weight, and most preferably amounts to 50, 70 or 95% by weight.

The water content in the wood filler used as a starting material in the manufacturing method of the invention amounts to 5 - 10% by weight, preferably to 5 - 8 %. The water content in the final WPC product is lower, due to water evaporation during extrusion process.

Preferably, the wood filler used as a starting material in the method of the invention, in addition to wood dust from the recycled particle board also comprises wood flour from recycled or waste wood or wood dust from recycled or waste MDF or HDF, or a mixture thereof, in the amount from 2 - 60% by weight, preferably 5 - 50% by weight, and most preferably amounts to 5, 30 or 50% by weight.

In the preferred embodiment particle size of the wood filler used in the method of the invention is in the range from 0.05 - 1.5 mm, preferably from 0.05 to 1.2 mm, and most preferably from 0.05 to 1 mm.

The preferred thermoplastic polymers and additives used in the method of the invention are listed above.

The wood filler comprising wood dust from the recycled particle board used in the method of the invention is obtained directly in a recycling process of post-consumer wood products and wood product waste, wherein said process comprises a multi-stage grinding of post-consumer wood products and wood product waste, separation of contaminants from the ground wood material, fractioning the ground wood material according to particle size, selecting a fraction having particle size of 0.05 - 1.5 mm and wherein the content of the wood filler depends on the selection of the recycled post-consumer wood products and wood product waste. The recycling process of post-consumer wood products and wood product waste does not comprise a step of drying and the wood filler obtained therein can be used without drying as a starting material in the wood plastic composite manufacturing method.

The wood filler used to manufacture the WPC consists of the dust obtained directly from recycling of post-consumer wood and wood waste, as well as wood derived products such as PB, MDF, HDF and OSB. These post-consumer and waste materials include furniture, construction elements, packaging material, transportation pallets and the like, as well as off-cuts and manufacturing scrap from wood industry. In the process or recycling post-consumer or waste material undergoes initial selection and it is subsequently subjected to a multi-stage grinding and size-dependent fraction separation process. The grinding of the post-consumer or waste material is necessary for separation of contaminants, such as mineral impurities (e.g. sand, stones, etc.), metal elements (e.g. nails, screws, pins, staples, metal couplings, etc.), plastic and textiles. The dust suitable for use in the WPC contains small particles, with the size range of 0.01 - 1.5 mm. Therefore the dust resulting from recycling needs to be separated from larger chips or sawdust that can be utilized in a different process. The equipment used in the above recycling process comprises standard equipment, which includes, for example, a system of grinding mills and sieves for size fractioning. Nevertheless, a person skilled in the art can design a production line, that is suitable for carrying the above recycling process.

It is important that the dust resulting from recycling can be used directly as wood filler in the method of the invention as it does not require any additional drying. The moisture content of the wood filler consisting entirely of the dust obtained in the above identified recycling process is in the range of 5 to 10% by weight, preferably 5 to 8% by weight. Despite this relatively high moisture content (the average moisture content of the wood filler used typically for the WPC production is about 2 - 4% by weight), the dust obtained in the recycling process can be used directly to produce the WPC in accordance to the invention.

It is also important that the final content of the resulting wood filler can be adjusted by the selection of post-consumer or waste material (for example by varying the ratio of PB waste material to MDF or HDF or wood waste material) used in the recycling process. The amount of the recycled waste material is adjusted, so that PB dust content in the resulting dust is between of 40 - 98% by weight, preferably 50 - 95% by weight, and most preferably amounts to 50, 70 or 95% by weight.

The invention also provides the use of the wood filler according to claim 9 comprising wood dust from the recycled particle board in the amount of 40 - 98% by weight, preferably 50 - 95% by weight, and most preferably amounts to 50, 70 or 95% by weight, in the manufacture of the wood plastic composite. This wood filler is obtained directly in the recycling process described above.

The method of manufacturing of the WPC can be carried out in any known WPC production line. An example of a suitable production line is disclosed in EP 1 498 241. In a model production line the wood filler obtained from the recycling process described above are initially stored in a suitable container. Next the wood filler is supplied to a sieving device in order to separate larger than 1.5 mm particles. The particles that did not go through the sieving devices are directed to a different storage unit in order to be subsequently ground or crushed into smaller particles. The particles that have passed through the openings of the sieving device are directed to a different storage unit.

From that storage unit the wood filler particles are supplied optionally to a heating device comprising, for example an infrared radiation heater. From the heating device the wood filler particles are directed to a dosing device, which provides wood filler particle to the mixing device. The thermoplastic polymer and additives are also provided to said mixing device from separate dosing devices. The polymer can be supplied in a form of solid granules or in a liquid form. The wood filler mixed with the polymer and optionally with the additives is supplied to an extruder, which shapes the mixed wood filler, polymer and additives into a desired shape. The WPC can be shaped into an end product, for example a decking panel.

Alternatively the wood filler, the polymer and optionally the additives can be compounded into pellets or granules that can be used if a subsequent extrusion of or injection molding process.

BRIEF DESCRIPTION OF DRAWINGS

The subject of the disclosure was illustrated in a drawing, in which:

Figure 1 presents the photographs of two wood filler samples of the disclosure - a) sample E comprising 70% by weight of PB and 30% by weight of MDF and b) sample H comprising 95% by weight of PB and 5% by weight of MDF;
Figure 2 presents photographs of the WPC articles in a form of profiles produced from a) wood flour (a reference sample), b) sample E and c) sample H;
Figure 3 presents a diagram illustrating flexural properties of the WPC article obtained from sample E and sample H of the disclosure and a reference sample C,
Figure 4 presents a diagram illustrating heat deflection temperature and impact strength properties of the WPC article obtained from sample E and sample H of the disclosure and a reference sample C,
Figure 5 presents a diagram illustrating water absorption in time of the WPC article obtained from sample E and sample H of the disclosure and a reference sample C, and
Figure 6 presents a diagram illustrating bending properties of the WPC article obtained from sample E and sample H of the disclosure and a reference sample C.

EXAMPLE

In order to study a possibility to use PB recycled material as a wood filler in the manufacture of WPC the following samples of recycled dust were prepared:

1) Sample E comprising 70% by weight of PB and 30% by weight of MDF
2) Sample E' comprising 50% by weight of PB and 50% by weight of MDF, and
3) Sample H comprising 95% by weight of PB and 5% by weight of MDF.

The properties of these samples has been tested against a reference sample (sample C) consisting of wood flour (ARBOCEL C 100 having size distribution: 70 pm - 150 pm, bulk density: 140 g/l - 180 g/l and cubic structure).

In Example 1 dosing and compounding properties of the dust samples E, E' and H are investigated. In Example 2 extrusion process and properties of WPC profiles obtained from samples E, E' and H are tested. As samples E and E' have shown the same properties, only data for sample E is presented herein below.

EXAMPLE 1

For the feeding/dosing trials a gravimetric dosing system from Colortronic was used. The dosing trials were carried out for samples C, E and H, with dosing feeder equipped with a partial full-plate screw. The dosing trials were conducted in line with the compounding trials.

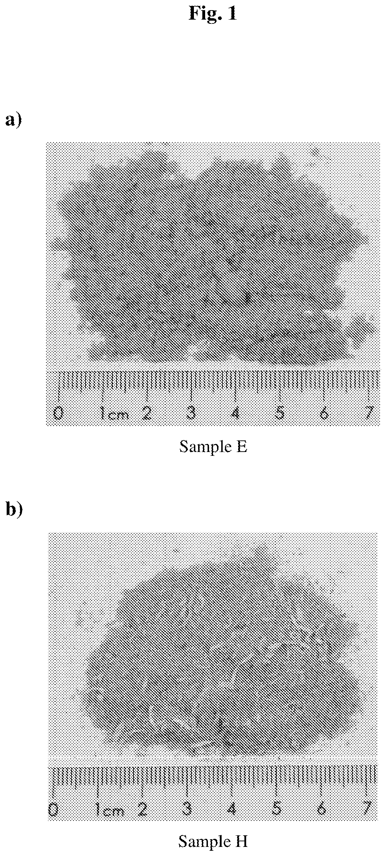

Samples E and H are presented in Fig. 1.

All samples showed negligible dosing fluctuations (in the range of 0.24 to 0.52%). It means that samples of the inventions have similar dosing properties to those of the reference sample.

The compounding trials were conducted at a battenfeld-cincinnati Fiberex K38, which is a conical, counter rotating, twin screw extruder with a force feeding unit. For the feeding a gravimetric dosing system from Colortronic was used. The granules were produced with a hot die face pelletizing system from EREMA

The compounding trials were carried out with an output of 20 kg/h and filling ratio of 1. This was necessary because with a higher filling ratio the mixing behavior of the extruder decreases due to presence of inhomogeneous material. The used formulations included 50% wood flour (sample C) or dust (samples E and H), 48% by weight of PVC dry-blend and 2% by weight of Ca/Zn based stabilizer/lubricant. Table 1 below summarizes compounding processes.

**Table 1 - processing protocol - compounding**

| Extruder | Fiberex K38 | | | | Feeder | Material | | | |
|---|---|---|---|---|---|---|---|---|---|
| Screw | T830.1.N8W WT *4449* | | | | 1 | see remarks | | | |
| Force Feeder | Fiberex | | | | 2 | PVC dry-blend | | | |
| Tool | KG80; 8x3,5 | | | | 3 | | | | |
| Operator | WIP | | | | 4 | stabilizer-/lubricant one pack | | | |
| Location | SciencePark 2 / 0012-1 | | | | 5 | | | | |
| | | | | | | | | | |
| Trial-number: | | reference sample C | | | sample E | | | sample H | | |
| extruder | | set | actual | % | set | actual | % | set | actual | % |
| Zone 1 | [°C] | 205 | | | 205 | | | 205 | | |
| Zone 2 | [°C] | 180 | | | 180 | | | 180 | | |
| Zone 3 | [°C] | 170 | | | 170 | | | 170 | | |
| adapter | [°C] | 180 | | | 180 | | | 180 | | |
| die plate | [°C] | 180 | | | 180 | | | 180 | | |
| filling ratio | [kg/Upmh] | 1 | | | 1 | | | 1 | | |
| spec. power | [Wh/kg] | 1.30 | | | 84 | | | 89 | | |
| screw speed | [Upm] | 20 | | | 20 | | | 20 | | |
| load extruder | [%] | 40,2 | | | 26,7 | | | 28,8 | | |
| screw speed feeder | [Upm] | 150 | | | 150 | | | 150 | | |
| melt temperature | [°C] | 198 | | | 192 | | | 196 | | |
| melt pressure | [bar] | 219 | | | 131 | | | 196 | | |
| output | [kg/h] | 20,3 | | | 20,7 | | | 20,7 | | |
| Feeder 1 | [%] \| [kg/h] \| STB% | 50 | 10,3 | | 50 | | 10,7 | 50 | 10,7 | |
| Feeder 2 | [%] \| [kg/h] \| STB% | 48 | 9,6 | | 48 | 9,6 | | 48 | 9,6 | |
| Feeder 3 | [%] \| [kg/h] \| STB% | | | | | | | | | |
| Feeder 4 | [%] \| [kg/h] \| STB% | 2 | 0,4 | | 2 | 0,4 | | 2 | 0,4 | |
| Feeder 5 | [%] \| [kg/h] \| STB% | | | | | | | | | |
| Feeder 6 | [%] \| [kg/h] \| STB% | | | | | | | | | |

The energy consumption (specific power) and the load of the extruder were significantly lower for the dust of samples E and H (see Table 3 below).

For example to produce 1 ton compound with wood flour 130 kWh is needed, whereas for 1 ton compound with dust sample E only 84 kWh is required. This corresponds to a 35% reduction. This fact is, beside the material costs, a big benefit of the dust from the waste from furniture industry. The decrease of energy consumption could be explained, on one hand, by the particle size distribution and on the other hand, by the presence of the impurities (e.g. residues from coatings, plastic or melamine finish foils).

Sample H showed no buildup in the force feeding unit, as well as best conveying and metering behavior.

EXAMPLE 2

The extrusion trials (direct extrusion) were conducted at a battenfeld-cincinnati Fi-berex K38, which is a conical, counter rotating, twin screw extruder with a force feeding unit and a standard downstream equipment from Greiner Extrusion GmbH. For the feeding a gravimetric dosing system from Colortronic was used. The shaping was done with the extrusion tool "decking".

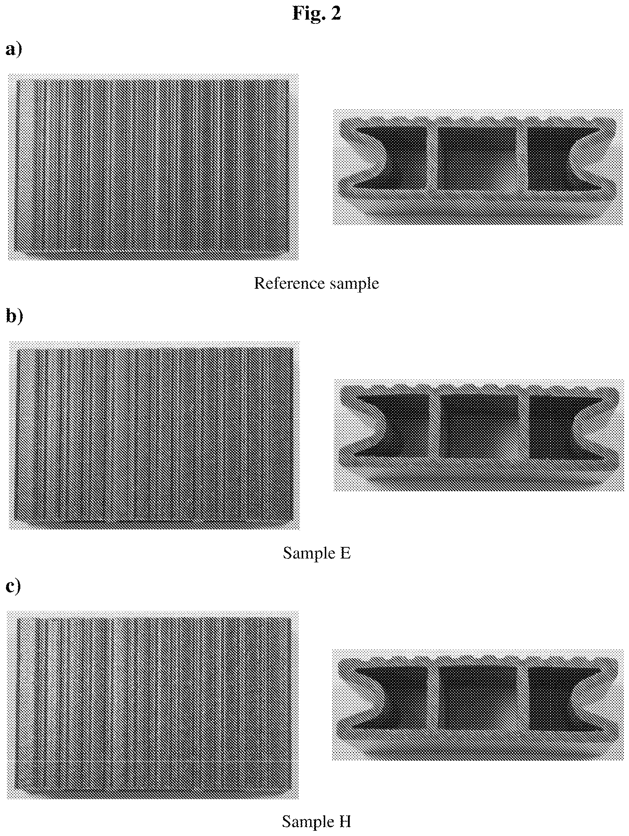

The obtained profiles obtained using reference sample C, sample E and sample H are presented in Fig. 2.

In general the extrusion of the produced compounds caused no problems. The process was stable regarding the parameters (e.g. mass pressure, energy input). But to get a profile which is totally free of failures optimizations will be necessary.

The extrusion trials were carried out with an output of 20 kg/h. A rise of material in the degassing zone did not occur and a continuous melt around the screws could be observed. The melt temperature was around 195 ± 2 °C.

As expected after the compounding trials, the energy consumption to manufacture 1 kg of the compounds comprising samples of the disclosure was significantly lower than that for 1 kg of wood-filled compound comprising reference sample C (see Table 2). The load of the extruder was therefore lower. This is a persuasive argument for lowering of carbon footprint and reduction of production costs, when using the wood feed with PB dust content of the invention.

All of the produced WPC profiles show a smooth surface with no inhomogeneity (agglomerates, etc.). The samples which contain dust from PB (samples E and H) are darker. Especially the profiles produced with sample E are the darkest (see Fig. 2). The impurities (residues from coatings, plastic or melamine finish foils) and coarse particles in the samples E and H can be seen on the surface. Thus the profiles produced from the WPC of the disclosure have a more natural look.

Table 2 below summarizes extrusion process.

**Table 2 - processing protocol - extrusion**

| Trial-number: | | reference sample C | | | sample E | | | sample H | | |
|---|---|---|---|---|---|---|---|---|---|---|
| extruder | | set | actual | % | set | actual | % | set | actual | % |
| Zone 1 | [°C] | 205 | | | 205 | | | 205 | | |
| Zone 2 | [°C] | 180 | | | 180 | | | 180 | | |
| Zone 3 | [°C] | 170 | | | 170 | | | 170 | | |
| adapter | [°C] | 180 | | | 180 | | | 180 | | |
| Zone 1 | [°C] | 180 | | | 180 | | | 180 | | |
| Zone 2 | [°C] | 180 | | | 180 | | | 180 | | |
| Zone 3 | [°C] | 180 | | | 180 | | | 180 | | |
| Zone 4 | [°C] | 180 | | | 180 | | | 180 | | |
| cooling plate | [°C] | 40 | | | 40 | | | 40 | | |
| filling ratio | [kg/Upmh] | 1 | | | 1 | | | 1 | | |
| spec. power | [Wh/kg] | 124 | | | 78 | | | 82 | | |
| screw speed | [Upm] | 20 | | | 20 | | | 20 | | |
| load extruder | [%] | 40,5 | | | 24,5 | | | 25,5 | | |
| screw speed feeder | [Upm] | 150 | | | 150 | | | 150 | | |
| melt temperature | [°C] | 198 | | | 194 | | | 194 | | |
| melt pressure | [bar] | 98 | | | 47 | | | 50 | | |
| output | [kg/h] | 20 | | | 20 | | | 20 | | |
| Feeder 1 | [%] \| [kg/h] \| STB% | | | | | | | | | |
| Feeder 2 | [%] \| [kg/h] \| STB% | 100 | 20 | | 100 | 20 | | 100 | 20 | |
| Feeder 3 | [%] \| [kg/h] \| STB% | | | | | | | | | |
| Feeder 4 | [%] \| [kg/h] \| STB% | | | | | | | | | |
| Feeder 5 | [%] \| [kg/h] \| STB% | | | | | | | | | |

(continued)

| Trial-number: | | reference sample C | | | sample E | | | sample H | | |
|---|---|---|---|---|---|---|---|---|---|---|
| extruder | | set | actual | % | set | actual | % | set | actual | % |
| Feeder 6 | [%] \| [kg/h] \| STB% | | | | | | | | | |

The test were conducted in order to determine the properties of the WPC of the disclosure. The specimen were cut with a circular saw from the extruded profiles (made with the reference sample C and samples E and H of the disclosure). .Samples for material testing were milled with a CNC-rotary cultivator. Sample sizes are defined by the respective standards.

The following test methods has been used:

Density: EN ISO 1183-1

Equipment: Balance: Sartorius
Density-Kit: Sartorius YDK01
Immersion liquid: water
Temperature: 23 ± 2 °C
Number of samples measured: 3
Sample size: approx. 35 x 10 x 4 mm
The density was calculated according to the following equation:

$$\rho_{(sample)} = \frac{m_{(air)} \times \left\lfloor \rho_{(water)} - \rho_{(air)} \right\rfloor}{\left\lfloor m_{(air)} - m_{(water)} \right\rfloor \times 0{,}99983} + \rho_{(air)}$$

Determination of flexural properties: EN ISO 178

Equipment: Universal testing machine, Messphysik Beta 50
Determination of E-Modulus: traverse path
Testing speed: 3 mm/min
Number of samples measured: 6
Sample size: approx. 80 x 10 x 4 mm

Determination of charpy impact strength: EN ISO 179/1fU

Equipment: Pendulum impact tester CEAST 9050; Pendulum hammer: 0.5 J
Impact direction: flatwise
Number of samples measured: 10
Sample size: approx. 80 x 10 x 4 mm
Sample: unnotched

Determination of heat deflection temperature: EN ISO 75-1

Equipment: HDT 3 Vicat - Ceast S.p.A.
Immersion liquid: silicon oil
Ramp: 120 °C/h
Start temperature: 30 °C Preheat time: 300 s
Bearing distance: 64 mm
Number of samples measured: 3
Sample size: approx. 80 x 10 x 4 mm

Immersion in cold water: EN 317

Equipment: Balance: Kern EG 420/3 NM (accuracy 0,001 g); Micrometer screw: Atom

Immersion liquid: water

Water temperature: 20 $\pm$ 2 °C
Sample size: 50 x 50 x 4 mm
Number of samples measured: 3
Immersion time: 24 h, 7 d, 14 d and 28 days
After the above mentioned immersion times the samples were taken out of the water, placed on an absorbent paper and the surface water was removed. Afterwards the weight of the samples was measured.

The water absorption (WA) was calculated according to the following equation;

$$WA(\%) = \frac{[m_{(sample\ after\ immersion)} - m_{(sample\ before\ immersion)}]}{m_{(sample\ before\ immersion)}} \times 100$$

The thickness swelling (SW) was calculated according to the following equation:

$$SW(\%) = \frac{[thickness_{(sample\ after\ immersion)} - thickness_{(sample\ before\ immersion)}]}{thickness_{(sample\ before\ immersion)}} \times 100$$ .

Bending test: ONORM EN 310

Equipment: Universal testing machine, Messphysik Beta 20
Number of samples measured: 5
Bearing distance: 20 x sample width
Determination of E-Modulus: length variation sensor ($\pm$ 1.5 pm), load was less than 10 % of $F_{max}$.
Test speed for determination of the bending strength was chosen, that the break occurs within 90 sec $\pm$ 30 sec.

Determination of the linear thermal expansion coefficient: Quality Mark

Equipment: Compartment drier: Binder FD 115, Freezer, Caliper: Hogetex
Sample size: 400 mm x width x height
Number of samples measured: 3
Method: Determination of the initial length: Storage in an oven at 60 °C for at least 48 h
Determination of the length: Storage in a freezer at -20 °C for at least 48 h
The determination of the length shall be done within 15 min after the removal from the oven as soon as the freezer.
The linear thermal expansion coefficient was calculated according to the following equation: **Alpha = Delta L / (Delta T x initial length) [K$^{-1}$]**
The results of the above tests for all the samples are presented in Table 3 below.

**Table 3 - overview of the obtained results**

| Property | Test method | Unit | sample C | | | sample E | | | sample H | | |
|---|---|---|---|---|---|---|---|---|---|---|---|
| Density | EN ISO 1183-1 | g/cm$^3$ | 1,33 | ± | 0,01 | 1,36 | ± | 0,00 | 1,36 | ± | 0,00 |
| Flexural properties (3 mm/min) | EN ISO 178 | | | | | | | | | | |
|     Flexural Modulus | | MPa | 5 550 | ± | 218 | 5 689 | ± | 296 | 5 763 | ± | 253 |
|     Flexural Strength | | MPa | 56,00 | ± | 3.37 | 58,06 | ± | 3.18 | 53.51 | ± | 3,18 |
|     Elongation (at break) | | % | 1,22 | ± | 0.03 | 1.24 | ± | 0.03 | 1.19 | ± | 0,05 |
| Impact strength (Charpy, annotched) | EN ISO 179 | kJ/m$^2$ | 4.72 | ± | 0.72 | 4.50 | ± | 0.77 | 4.02 | ± | 0,72 |
| Heat deflection temperature | ISO 75-2 | °C | 74,03 | ± | 1,29 | 70,93 | ± | 1,29 | 71,20 | ± | 0.56 |
| Immersion in cold water | EN 317 | | 0,00 | | | 0,00 | | | 0,00 | | |
|     Water absorption 1 day | | % | 1,83 | ± | 0,09 | 1,05 | ± | 0,01 | 1,19 | ± | 0.01 |
|     Water absorption 7 days | | % | 6,81 | ± | 0,26 | 4,03 | ± | 0,05 | 4,51 | ± | 0.02 |
|     Water absorption 14 days | | % | 10,22 | ± | 0,37 | 6,10 | ± | 0,07 | 6,80 | ± | 0.04 |
|     Water absorption 28 days | | % | 15,12 | ± | 0,45 | 9,43 | ± | 0,08 | 10,74 | ± | 0.06 |
|     Thickness swelling 1 day | | % | 1,05 | ± | 0,45 | 1,15 | ± | 0,39 | 0,73 | ± | 0.03 |
|     Thickness swelling 7 days | | % | 4,13 | ± | 0,63 | 2,82 | ± | 0,37 | 2,52 | ± | 0.29 |
|     Thickness swelling 14 days | | % | 5,63 | ± | 0,92 | 4,02 | ± | 0,49 | 3,94 | ± | 1.76 |
|     Thickness swelling 28 days | | % | 9,13 | ± | 0,90 | 6,37 | ± | 0,63 | 6,24 | ± | 1.03 |
| Bending properties | ÖNORM EN 310 | | | | | | | | | | |
|     Bending Modulus. | | MPa | 4 104 | ± | 187 | 3 517 | ± | 90 | 3 510 | ± | 54 |
|     Bending Strength | | MPa | 28,68 | ± | 1,45 | 26,38 | ± | 0,76 | 25,18 | ± | 0.48 |
|     Breaking load | | N | 1 804 | ± | 68 | 1 699 | ± | 50 | 1 616 | ± | 37 |
|     Defelection$_{500N}$ | | mm | 3,45 | ± | 0,10 | 3,89 | ± | 0,07 | 3,90 | ± | 0.05 |
| Coefficient of linear thermal expansion | Quality Mark | K$^{-1}$ | 1.98E-05 | | | 2,26E-05 | | | 2,41E-05 | | |

Density (EN ISO 1183-1) - All samples were between 1.33 g/cm$^3$ and 1.40 g/cm$^3$ which is a normal range for PVC-based WPC-formulations (with 50 % by weight of wood flour). In general, the density depends on the wood species, the cell wall mechanics/thickness and of course filler content. The combination of pressure and heat could develop an elastic collapse of thin cell walls, increasing the composite density.

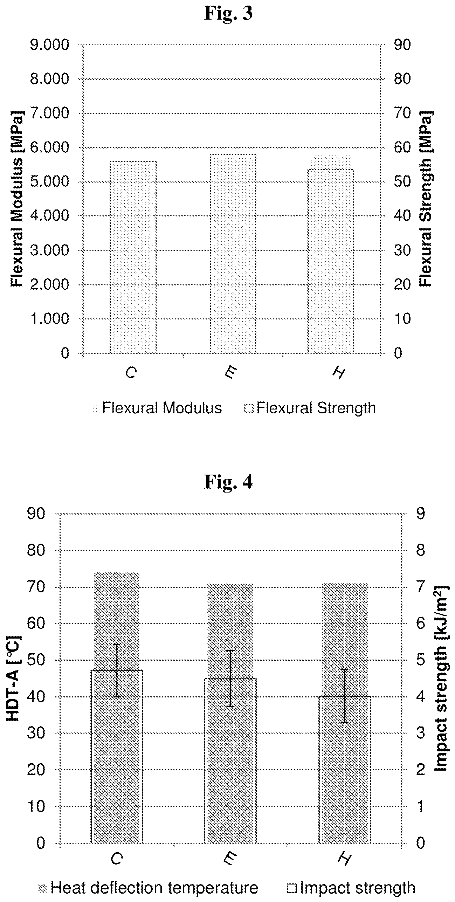

Flexural properties (EN ISO 178) - The stiffness (expressed by the Flexural Modulus) as well as the Flexural Strength of the tested formulations E, H and the reference C are comparable (see Fig. 3).

Impact strength (EN ISO 179) - As seen in Fig. 4, the all sample formulations of the disclosure show similar properties of the reference sample.

Heat deflection temperature (ISO 75-2) - Concerning the thermal stability, hardly any differences between the tested formulations were observed (see Fig. 4).

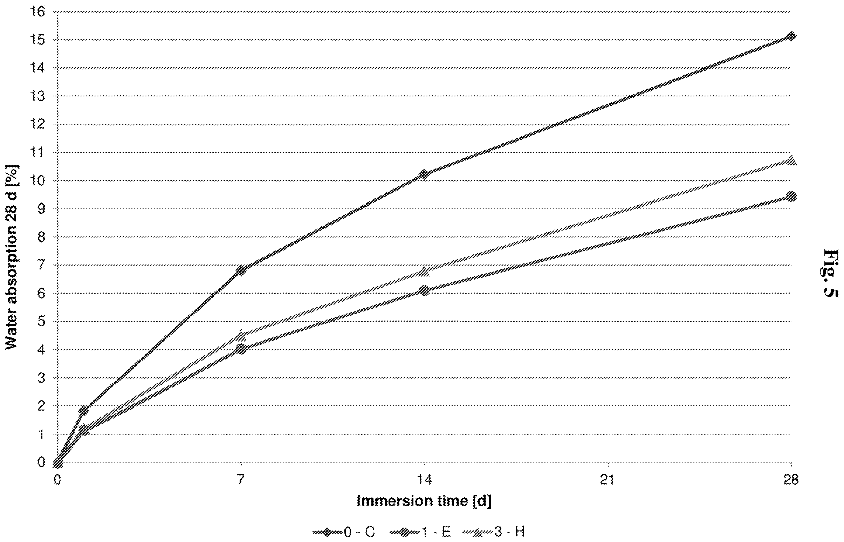

Water absorption & swelling (EN 317) - The formulations of the disclosure (sample E and H) show a better resistance to moisture (cold water) compared to the reference with wood flour (reference sample C), as seen in Fig. 5. For example, the water absorption is at least 29 % lower. This is, beside the reduction of the energy consumption, another big advantage of the usage of dust types from the furniture industry as filler/reinforcement for polymers.

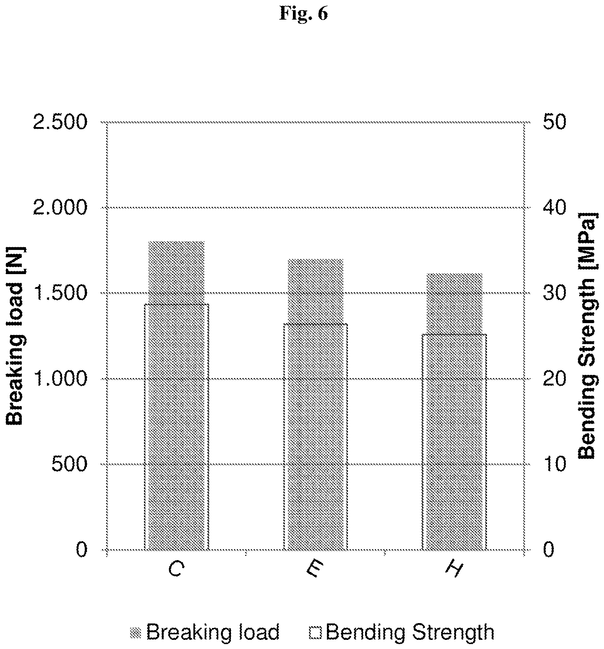

Bending properties (ONORM EN 310) - All profiles show corresponding Bending Strength as well as breaking load (see Fig. 6). But the results should not be overstated because of the profile geometry and wall thickness (< 4 mm).

Coefficient of linear thermal expansion (Quality Sign) - The thermal expansion of the reference sample C is significantly lower in comparison to sample E and H.

Performance under cyclic climatic stress (EN 321) - The maximum reduction of the modulus of rupture (Bending Modulus) is 5.4 % (sample IE). The Bending Strength decreased maximum 8.2 % (sample H). Regarding the deflection at a load of 500 N, an increase of maximum 3.6 % were measured. The maximum reduction of the breaking load is 8.0 % (sample H).

So all in all, the maximum changes are below 10 %. Therefore no problems concerning performance under climatic stress (temperature fluctuations in combination with moisture) are expected.

It should be emphasized that the mechanical, physical and thermal properties of samples E and H, i.e. the samples of the invention are comparable to the wood-filled reference (sample C). Distinct advantages can be found regarding moisture resistance (after storage in cold water for 28 days).

The above results clearly show that wood filler comprising a significant content of particle board (PB) dust obtained from recycling of wood waste can be used effectively for manufacturing of WPC products.

**Claims**

1.  A method of manufacturing wood plastic composite comprising mixing wood filler in the amount of 40 - 80% by weight with heated thermoplastic polymer in the amount of 20 - 60% by weight and optionally additives in the amount of 0 - 30 % by weight and extruding thus formed mixture into the desired shape, wherein the wood filler comprises wood dust from a recycled particle board in the amount of 40 - 98% by weight, wherein

    - said wood filler is obtained directly in a recycling process of post-consumer wood products and wood product waste by a multi-stage grinding of post-consumer wood products and wood product waste, separation of contaminants from the ground wood material, fractioning the ground wood material according to particle size, selecting a fraction having particle size of 0.05 - 1.5 mm, and wherein the content of the wood filler depends on the selection of the recycled post-consumer wood products and wood product waste,
    - the water content in thus obtained wood filler used as a starting material in the manufacturing method amounts to 5 - 10 % by weight, and
    - the recycling process of post-consumer wood products and wood product waste does not comprise a step of drying and the wood filler obtained therein can be used directly as a starting material in the wood plastic composite manufacturing method.

2.  The method according to claim 1, wherein the water content in the wood filler used as a starting material in the manufacturing method amounts to 5 - 8 %.

3.  The method according to claim 1 or 2, wherein the wood filler comprises wood dust from the recycled particle board in the amount of 50 - 95% by weight.

4.  The method according to anyone of claims 1 - 3, wherein the wood filler in addition to wood dust from the recycled particle board also comprises wood flour from recycled or waste wood or wood dust from recycled or waste MDF or HDF, or a mixture thereof, in the amount from 2 - 60% by weight.

5. The method according to anyone of claims 1 - 4, wherein thermoplastic polymer is selected from a group comprising polyethylene (PE), polyvinyl chloride (PVC), polypropylene (PP), acrylonitrile butadiene styrene (ABS), polystyrene (PS), polylactic acid (PLA), polysulfone (PES), polyhydroxyalkanoate (PHA), poly(styrene-butadienestyrene) (SBS), poly(styrene-ethylene-butadiene-styrene) (SEBS), thermoplastic polyurethane (TPU), thermoplastic elastomers (TPE), polyethylene oxide (PEO), ethylene-vinyl acetate (EVA), styrene maleic anhydride (SMA), and poly(methyl methacrylate) (PMMA), or a mixture thereof.

6. The method according to claim 5, wherein thermoplastic polymer is selected from a group comprising polyethylene (PE), polyvinyl chloride (PVC), polypropylene (PP), acrylonitrile butadiene styrene (ABS), polystyrene (PS) and polylactic acid (PLA).

7. The method according to claim 6, wherein thermoplastic polymer is polyvinyl chloride (PVC).

8. The method according to anyone of claims 1 - 7, wherein the additives are selected from a group comprising coupling agents, stabilizers, UV stabilizers, foaming agents, lubricants, flame retardants, biocidal agents, and coloring agents.

9. Use of the wood filler comprising wood dust from the recycled particle board in the amount of 40 - 98% by weight in the manufacture of the wood plastic composite according to anyone of claims 1 - 8, wherein

   - said wood filler is obtained directly in a recycling process of post-consumer wood products and wood product waste by a multi-stage grinding of post-consumer wood products and wood product waste, separation of contaminants from the ground wood material, fractioning the ground wood material according to particle size, selecting a fraction having particle size of 0.05 - 1.5 mm, and wherein the content of the wood filler depends on the selection of the recycled post-consumer wood products and wood product waste,
   - the water content in thus obtained wood filler used as a starting material in the manufacturing method amounts to 5 - 10 % by weight, and
   - the recycling process of post-consumer wood products and wood product waste does not comprise a step of drying and the wood filler obtained therein can be used directly as a starting material in the wood plastic composite manufacturing method.

**Patentansprüche**

1. Verfahren zur Herstellung eines Holz-Kunststoff-Verbundwerkstoffs mit folgenden Schritten : Mischen vom Holzfüllstoff in einer Menge von 40-80 Gew.-% mit einem wärmebehandelten thermoplastischen Polymer in einer Menge von 20-60 Gew.-% und optional mit Additiven in einer Menge
   von 0-30 Gew.-% sowie Extrudieren der in dieser Weise erhaltenen Mischung in die gewünschte Form, wobei der Holzfüllstoff einen Holzstaub aus wiederverwerteten Spanplatten in einer Menge von 40-98 Gew.-% enthält, wobei

   - der Holzfüllstoff direkt im Recyclingprozess von gebrauchten Holzprodukten und Holzproduktabfällen durch ein mehrstufiges Mahlprozesses von gebrauchten Holzprodukten und Holzproduktabfällen, durch Abtrennung von Verunreinigungen aus dem zerkleinerten Holzmaterial, durch Fraktionierung des zerkleinerten Holzmaterials nach der jeweiligen Partikelgröße, durch Auswahl der Fraktion mit einer Partikelgröße von 0,05-1,5 mm erzeugt wird, wobei der Inhalt des Holzfüllstoffs von der Auswahl der wiederverwertbaren gebrauchten Holzprodukte und Holzproduktabfälle abhängt,
   - der Wassergehalt in dem in diesem Verfahren erzeugten Holzfüllstoff, der als Rohstoff für das beschriebene Herstellungsverfahren verwendet wird, 5-10 Gew.-% beträgt, und
   - der Recyclingprozess von gebrauchten Holzprodukten und Holzproduktabfällen umfasst keine Trocknung und der dabei gewonnene Holzfüllstoff direkt als Rohstoff für das beschriebene Herstellungsverfahren von Holz-Kunststoff-Verbundwerkstoff verwendet werden kann.

2. Verfahren nach Anspruch 1, wobei der Wassergehalt in dem als Rohstoff für das Herstellungsverfahren verwendeten Holzfüllstoff 5-8% beträgt.

3. Verfahren nach Anspruch 1 oder 2, wobei der Holzfüllstoff einen Holzstaub aus verwerteten Spanplatten in einer Menge von 50-95 Gew.-% enthält.

4. Verfahren nach einem der Ansprüche 1-3, wobei der Holzfüllstoff und daneben der Holzstaub aus wiederverwerteten Spanplatten auch ein Holzmehl aus wiederverwerteten oder gebrauchten Holzabfällen oder Holzstaub aus wiederverwerteten oder MDF- oder HDF-Abfällen oder aus einer Mischung davon in der Menge von Gew.-2-60% enthalten.

5. Verfahren nach einem der Ansprüche 1-4, wobei das thermoplastische Polymer aus einer Gruppe ausgewählt wird, die Polyethylen (PE), Polyvinylchlorid (PVC), Polypropylen (PP), Acrylnitril-Butadien-Styrol (ABS), Polystyrol (PS), Polymilchsäure (PLA), Polyethersulfon (PES), Polyhydroxyalkanoat (PHA), Poly(Styrol-Butylen-Styrol) (SBS), Poly(Styrol-Ethylen-Butylen-Styrol) (SEBS), thermoplastisches Polyurethan (TPU), thermoplastische Elastomere (TPE), Polyethylenoxid (PEO), EthylenVinylacetat (EVA), Styrol-Maleinsäureanhydrid (SMA) und Poly(methylmethacrylat) (PMMA) oder eine Mischung davon umfasst.

6. Verfahren nach Anspruch 5, wobei das thermoplastische Polymer aus einer Gruppe ausgewählt wird, die Polyethylen (PE), Polyvinylchlorid (PVC), Polypropylen (PP), Acrylnitril-Butadien-Styrol (ABS), Polystyrol (PS) und Polymilchsäure (PLA) umfasst.

7. Verfahren nach Anspruch 6, wobei das thermoplastische Polymer Polyvinylchlorid (PVC) ist.

8. Verfahren nach einem der Ansprüche 1-7, wobei die Additive aus einer Gruppe ausgewählt werden, die Kopplungsmittel, Stabilisatoren, UV-Stabilisatoren, Schaumbildner, Schmiermittel, Flammschutzmittel, Biozide und Pigmente umfasst.

9. Verwendung des Holzfüllstoffs, der einen Holzstaub aus wiederverwerteten Spanplatten in einer Menge von 40-98 Gew.-% enthält, bei der Herstellung des Holz-Kunststoff-Verbundstoffs nach einem der Ansprüche 1-8, wobei

- der Holzfüllstoff direkt im Recyclingprozess von gebrauchten Holzprodukten und Holzproduktabfällen durch ein mehrstufiges Mahlprozesses von gebrauchten Holzprodukten und Holzproduktabfällen durch Abtrennung von Verunreinigungen aus dem zerkleinerten Holzmaterial, durch Fraktionierung des zerkleinerten Holzmaterials nach der jeweiligen Partikelgröße, durch Auswahl der Fraktion mit einer Partikelgröße von 0,05-1,5 mm erzeugt wird, wobei der Inhalt des Holzfüllstoffs von der Auswahl der wiederverwertbaren gebrauchten Holzprodukte und Holzproduktabfälle abhängt,
- der Wassergehalt in dem in diesem Verfahren erzeugten Holzfüllstoff, der als Rohstoff für das beschriebene Fertigungsverfahren verwendet wird, 5-10 Gew.-% beträgt, und
- der Recyclingprozess von gebrauchten Holzprodukten und Holzproduktabfällen umfasst keine Trocknung und der dabei gewonnene Holzfüllstoff direkt als Rohstoff für das beschriebene Herstellungsverfahren Holz-Kunststoff-Verbundwerkstoff verwendet werden kann.

**Revendications**

1. Procédé de fabrication de composite bois-plastique comprenant le mélange d'une charge de bois en quantité de 40 à 80% en poids avec un polymère thermoplastique chauffé en quantité de 20 à 60% en poids et éventuellement d'additifs en quantité de 0 à 30% en poids et extruder le mélange ainsi formé dans la forme souhaitée, la charge de bois comprenant de la poussière de bois provenant d'un panneau de particules recyclé en une quantité de 40 à 98% en poids, où

- ladite charge de bois est obtenue directement dans un processus de recyclage des produits en bois post-consommation et des déchets de produits en bois par un broyage en plusieurs étapes de produits en bois post-consommation et de déchets de produits en bois, séparation des contaminants du matériau en bois broyé, fractionnement du sol matériau de bois en fonction de la taille des particules, sélectionnant une fraction ayant une taille de particules de 0,05 à 1,5 mm, et la teneur en charge de bois dépendant de la sélection des produits en bois recyclés post-consommation et des déchets de produits en bois,
- la teneur en eau de la charge de bois ainsi obtenue utilisée comme matériau de départ dans le procédé de fabrication est de 5 à 10% en poids, et
- le processus de recyclage des produits en bois post-consommation et des déchets de produits en bois ne comprend pas d'étape de séchage et la charge de bois qui y est obtenue peut être utilisée directement comme matière première dans le procédé de fabrication de composite bois-plastique.

2. Procédé selon la revendication 1, dans lequel la teneur en eau dans la charge de bois utilisée comme matériau de départ dans le procédé de fabrication s'élève à 5-8%.

3. Procédé selon la revendication 1 ou 2, dans lequel la charge de bois comprend de la poussière de bois provenant du panneau de particules recyclé en une quantité de 50 à 95% en poids.

4. Procédé selon l'une quelconque des revendications 1 à 3, dans lequel la charge de bois en plus de la poussière de bois du panneau de particules recyclé comprend également de la farine de bois de bois recyclé ou de déchets ou de la poussière de bois de MDF ou HDF recyclé ou de déchets, ou un mélange de ceux-ci, en une quantité de 2 à 60% en poids.

5. Procédé selon l'une quelconque des revendications 1 à 4, dans lequel le polymère thermoplastique est choisi dans un groupe comprenant le polyéthylène (PE), le chlorure de polyvinyle (PVC), le polypropylène (PP), l'acrylonitrile butadiène styrène (ABS), le polystyrène (PS), l'acide polylactique (PLA), polysulfone (PES), polyhydroxyalcanoate (PHA), poly(styrène-butadiène-styrène) (SBS), poly(styrène-éthylène-butadiène-styrène) (SEBS), polyuréthane thermoplastique (TPU), élastomères thermoplastiques (TPE), l'oxyde de polyéthylène (PEO), l'éthylène-acétate de vinyle (EVA), l'anhydride maléique de styrène (SMA) et le poly(méthacrylate de méthyle) (PMMA), ou un mélange de ceux-ci.

6. Procédé selon la revendication 5, dans lequel le polymère thermoplastique est choisi dans un groupe comprenant le polyéthylène (PE), le chlorure de polyvinyle (PVC), le polypropylène (PP), l'acrylonitrile butadiène styrène (ABS), le polystyrène (PS) et l'acide polylactique (PLA).

7. Procédé selon la revendication 6, dans lequel le polymère thermoplastique est le chlorure de polyvinyle (PVC).

8. Procédé selon l'une quelconque des revendications 1 à 7, dans lequel les additifs sont choisis dans un groupe comprenant des agents de couplage, des stabilisants, des stabilisants UV, des agents moussants, des lubrifiants, des ignifugeants, des agents biocides et des colorants.

9. Utilisation de la charge de bois comprenant de la poussière de bois provenant du panneau de particules recyclé en une quantité de 40 à 98% en poids dans la fabrication du composite plastique bois selon l'une quelconque des revendications 1 à 8,

  - où ladite charge de bois est obtenue directement dans un processus de recyclage des produits en bois post-consommation et des déchets de produits en bois par un broyage en plusieurs étapes de produits en bois post-consommation et de déchets de produits en bois, séparation des contaminants du matériau en bois broyé, fractionnement du sol matériau de bois en fonction de la taille des particules, sélectionnant une fraction ayant une taille de particules de 0,05 à 1,5 mm, et la teneur en charge de bois dépendant de la sélection des produits en bois recyclés post-consommation et des déchets de produits en bois,
  - la teneur en eau de la charge de bois ainsi obtenue utilisée comme matériau de départ dans le procédé de fabrication est de 5 à 10% en poids, et
  - le processus de recyclage des produits en bois post-consommation et des déchets de produits en bois ne comprend pas d'étape de séchage et la charge de bois qui y est obtenue peut être utilisée directement comme matière première dans le procédé de fabrication de composite bois-plastique.

**Fig. 1**

a)

Sample E

b)

Sample H

## Fig. 2

a)

Reference sample

b)

Sample E

c)

Sample H

## Fig. 3

## Fig. 4

## Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59156712 B
- WO 2004060066 A
- US 20160137820 A
- US 2010330185 A
- EP 1816160 A
- US 6344504 B
- US 6180257 B
- US 6117924 A
- US 5516472 A
- EP 1498241 A
- US 20030021915 A
- US 20030056873 A
- EP 0668820 B1

**Non-patent literature cited in the description**

- **JIN KUK KIM ; KAUSHIK PAL.** Recent Advances in the Processing of Wood-Plastic Composites. Springer-Verlag Berlin Heidelberg, 2011
- *bioplastics MAGAZINE,* vol. 9, 42-44